Europäisches Patentamt

European Patent Office

Office européen des brevets

(11) Publication number: **0 323 701 B1**

(12) EUROPEAN PATENT SPECIFICATION

(45) Date of publication of patent specification: **30.12.92**　(51) Int. Cl.5: **B01D 35/30**

(21) Application number: **88311030.6**

(22) Date of filing: **22.11.88**

The file contains technical information submitted after the application was filed and not included in this specification

(54) Fluid filter apparatus.

(30) Priority: **23.12.87 US 138613**

(43) Date of publication of application:
**12.07.89 Bulletin 89/28**

(45) Publication of the grant of the patent:
**30.12.92 Bulletin 92/53**

(84) Designated Contracting States:
**DE FR GB IT**

(56) References cited:
**DE-C- 3 325 526**
**FR-A- 1 477 891**
**US-A- 3 909 414**
**US-A- 4 561 979**

(73) Proprietor: **PARKER HANNIFIN CORPORATION**
**17325 Euclid Avenue**
**Cleveland Ohio 44112(US)**

(72) Inventor: **Popoff, Peter**
**3625 Ganado Way**
**Modesto California 95356(US)**
Inventor: **Church, John F.**
**1002 College Avenue**
**Modesto California 95350(US)**
Inventor: **Stone, Walter H.**
**326 Sevirin Avenue**
**Modesto California 95351(US)**

(74) Representative: **Purvis, William Michael**
**Cameron et al**
**D. Young & Co. 10 Staple Inn**
**London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 323 701 B1

## Description

The invention relates to fluid filter apparatus and has particular though not exclusive application to diesel engine fuel filters of the replaceable cartridge variety.

Cartridge type replaceable filter elements have found widespread application by providing particularly easy interchange of the filter medium.

Patent Specification FR-A-1 477 891 discloses a disposable fluid filter having a two piece plastics body, an upper piece of which has a tubular filter engaged thereon, the filter being contained by the lower piece of the body and the two pieces being secured together.

In many instances, a spin-on kind of filter cartridge is utilised as this provides the additional convenience of simply threading and unthreading the cartridge to accommodate the interchange.

At one time top loading cartridge filter designs divided the filter housing and the filter element into separable entities usually comprising three parts, namely a disposable filter element, a filter housing and a filter cover assembly. These separate components enabled manufacturers to offer sturdy, permanent filter housings while minimising replacement element components and costs.

Spin-on filter elements were later developed which comprised an inseparable filter housing and element assembly (usually disposable) along with a non-disposable head or cover assembly. Spin-on elements initially offered convenience in element changeover cartridge elements, but passed increased replacement element costs onto the end user. They were also less convenient than normal in top loading configurations.

Changing the filter element on the typical top loading cartridge filter involves draining the housing below the filter cartridge. The cover assembly and cartridge element are then removed from the housing in two separate operations. This can be time consuming and inconvenient in that the filter element has usually been submersed in the fluid and cannot be extracted by hand without contacting the fluid.

In changing a typical top loading, spin-on unit, the element/housing must be completely drained of fluid before unscrewing from the head assembly to avoid spillage. This often involves a significant waiting period for the housing to drain completely. Spin-on element replacement is more expensive than similar cartridge element replacement because the element and housing are inseparable and both must be disposed of.

The spin-on concept especially in top loading applications, did not vastly improve element change convenience over cartridge elements, but it did increase replacement element costs.

According to the invention there is provided fluid filter apparatus, comprising a top loading readily replaceable fluid filter including:

a vertically oriented generally cylindrical filter housing having an open upper end;

a fluid flow path to route fluid into, through and out of the housing and including port means;

a vertical standpipe in the housing in direct fluid communication with one of the port means;

a filter medium of annular configuration to be disposed in surrounding relation to the standpipe and in the flow path to separate out fluid contaminants, the filter medium including a first axial upper end and a second axial lower end;

an imperforate end cap secured to the second axial lower end of the filter medium, the end cap including a central opening to accept the standpipe;

seal means to seal the end cap on the standpipe; and

a disposable cover to close the open upper end of the housing, the filter medium being permanently affixed at its first axial upper end to the cover and the disposable cover being releasably secured at the open end of the housing and being disposable with the filter medium.

Such a top loading element design can conveniently be spun on and off and can avoid the multiple operations and mess associated with cartridge element change out and the higher cost associated with the previously proposed spin-on kind of element replacement.

In such a top loading filter with a spin-on combination cartridge element/cover assembly, the cover can be inexpensive and can be disposed of with the filter element at the element change out.

The filter housing is typically bolted to a vehicle panel or the like and is plumbed with the inlet and outlet ports to provide a fluid flow path throughout the housing. The central tubular stand pipe provides a part of the flow path whereby fluid is routed outwardly of the housing from an internal location near the top thereof, but different configurations could be employed. Typically, the housing is threaded at its open upper end to receive the combination cartridge element/cover assembly.

The cartridge assembly can be in the configuration of an annular filter medium of fairly conventional structure with a perforated centre tube supporting the filter medium with the filter medium and centre tube secured in the bottom end cap by a bed of potting compound to provide a unitary structure. The seal in the bottom end cap slides over the periphery of the standpipe when the cartridge is inserted into the filter housing. The cover provided at the open upper end of the housing includes an externally threaded depending flange to engage and close the open end of the housing. An elastomeric seal is provided as well for this purpose. The cover may include a central well therein in which the filter medium and centre tube are disposed and retained in place by means of a bed of potting compound so that the filter medium and end cover are an integral unit. Preferably, the cover is formed of glass-filled nylon to provide a relatively strong and yet inexpensive device for support of the filter medium and closure of the end of the housing. A central vent having a threaded plug therein is typically included in the end cover for venting and/or filling purposes. The filter housing may be a unitary housing configuration or one in which a separable collection bowl is included at the lower portion thereof. In both configurations, drain valves may be included for manual or automatic drain of the lower portion of the housing.

It is thus apparent that when a change of element is required, the cover element assembly can be unscrewed by hand and removed in one operation. As the cover portion itself is not externally submersed in fluid, this can be done without contacting the fluid. It is also desirable to drain the unit since otherwise fluid left in the housing will be filtered through the new element in refilling it when the assembly is screwed back onto the filter. This avoids wasted and spilled fuel as well as decreasing the drainage time required with prior top loading spin-on units.

The invention is diagrammatically illustrated by way of example in the accompanying drawings, in which:

Figure 1 is an elevation of one embodiment of fuel filter apparatus according to the invention having a combined cartridge/cover assembly;

Figure 2 is a vertical cross sectional view of the fuel filter of Figure 1; and

Figure 3 is a vertical cross sectional view of a second embodiment of fuel filter apparatus according to the invention having a combination filter element/cover assembly.

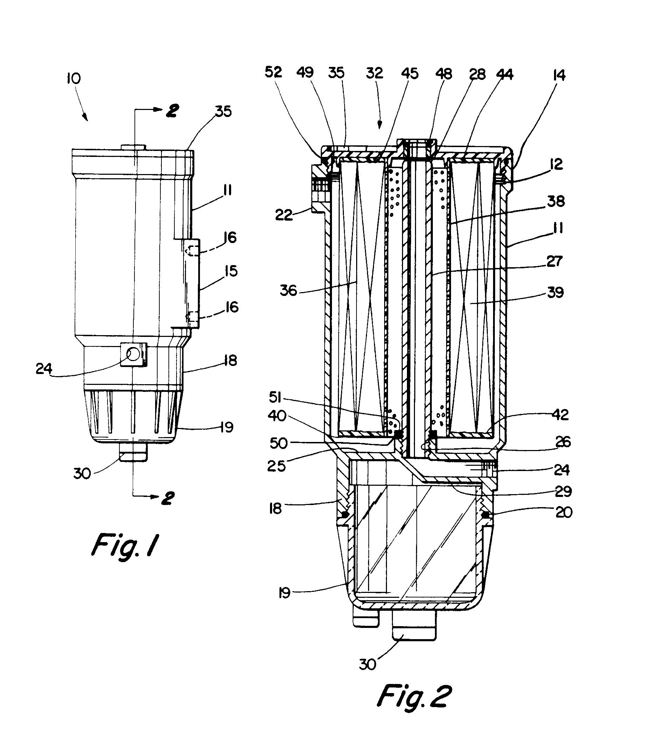

Referring to Figures 1 and 2, fuel filter apparatus comprises a fuel filter 10 having an elongate cylindrical housing 11 with internal threads 12 at its open upper end 14. The housing 11 has a lateral boss 15 thereon at its mid section which in turn includes several threaded openings 16 to receive bolts to secure the filter 10 to a stationary structure adjacent to a diesel engine or other device which with the filter is associated. The housing 11 includes a generally cylindrical reduced diameter lower end 18, similarly having internal threads thereon which receives a conventional collection bowl 19 to entrap contaminants which are separated from the fuel passing through the filter 10. The collection bowl 19 includes external threads at its upper end and an o-ring elastomeric seal 20 releaseably to secure the unit in a sealed manner to the lower end 18 of the housing 11.

The housing 11 further includes a threaded inlet port 22 near the upper end and an outlet port 24 near the bottom for the fluid internally of the filter housing 11. An internal transverse wall 25 which divides the reduced diameter lower end 18 of the housing from the upper portion thereof but allows fluid flow therebetween includes a vertical boss housing with a central opening 26 therein which is internally threaded and which can receive a standpipe 27. The standpipe 27 is an elongate tube which extends from the transverse wall 25 to an upper free end 28 which is adjacent the open upper end 14 of the housing 11. The standpipe 27 is vertically oriented in the housing and is disposed substantially on the central axis thereof. The lower end of the standpipe 27 is in fluid communication with the outlet port 24 being joined by means of a laterally extending conduit formed beneath the transverse wall 25 of the housing 11. The housing 11 is typically a die cast aluminum housing, machined to form the ports 22, 24 and the central opening 26 and together with the standpipe 27 establishes a fluid flow path within the housing 11 from the inlet port 22 to the outlet port 24. As noted, the collection bowl 19 may be of relatively conventional configuration comprising a see-through plastics bowl formed of polycarbonate or like material and preferably includes a drain valve 30 at the lower portion thereof. The collection bowl 19 may be threadedly removed from the housing 11 to remove contaminants from the interior thereof in addition to draining of the interior by means of the drain valve 30.

The fuel filter 10 further includes a combination cover/cartridge assembly 32 to provide a replaceable filter element feature for the filter assembly. The cartridge assembly includes a cover portion 35 and a cartridge portion 36 joined as a unitary assembly and serviceable in the filter 10 as an integral unit. The cartridge 36 comprises a conventional perforated centre tube 38 around which are disposed one or more layers of filter media 39 in an annular configuration and which may further be covered at the periphery by one or more wraps of paper or like material, the paper or like material extending part way or substantially the full axial length of the filter media 39. A plate-like bottom end cap 40 of generally annular configuration is disposed adjacent the lower axial end of the filter media 39 and is secured thereto as well as to the centre tube 38 by means of a layer of potting compound 42.

At its upper end, the filter element 39 is secured to the underside of the cover 35 in a similar manner, that is by a layer of potting compound 44 which permanently unites the filter media 39 with the cover 35. For this purpose the cover 35 which is generally, between concentric ridges, of circular, plate-like configuration, has a well 45 formed on its underside, in which the filter media 39 and the centre tube 28 may be positioned prior to pouring of the potting compound 44. The cover 35 includes a vent 48 formed in a central boss and which is normally closed by means of a threaded plug and serves either for venting of the interior of filter housing 11 or for filling purposes. The cover 35 further includes an externally threaded depending flange 49 at its periphery which is threadedly receivable in the open upper end 14 of the housing 11. The bottom end cap 40 of the cartridge 36 includes a central opening 50 therein in which is disposed an elastomeric annular seal 51, the seal 51 being sized to be a sliding, sealing fit over the periphery of the centre tube 27 so as to seal the lower end of the cartridge 36.

It will be apparent that the cover/cartridge assembly 32 can be unthreaded from the housing 11 and removed therefrom by axially withdrawing it, in the process sliding the seal 51 towards the free end 28 of the standpipe 27 and that a replaceable cover/cartridge assembly 32 may similarly be positioned within the housing 11 and threadedly engaged therewith in a sealing configuration. Preferably the cover/cartridge assembly 32 retains an o-ring seal 52 at its outer periphery to provide for efficient sealing engagement with the housing 11.

It will be apparent also that the cover/cartridge assembly 32 may be placed in or removed from the housing 11 without the necessity for physically contacting fluid contained in the housing 11 or even requiring the prior drainage of fluid therefrom. Further, it will be apparent that the cartridge 36 will be properly oriented within the housing 11 after being positioned therein with its lower end in sealing engagement with the standpipe 27 and placing the periphery of the filter media 39 in close-spaced relation to the interior of the housing 11 so that an annular peripheral fuel chamber is provided therebetween for receipt of fluid from the inlet port 22. After fluid passes through the filter media 39 and the perforated centre tube 38, it will be routed through the standpipe 27 to the outlet port 24 and outwardly to a remote part of the fluid system.

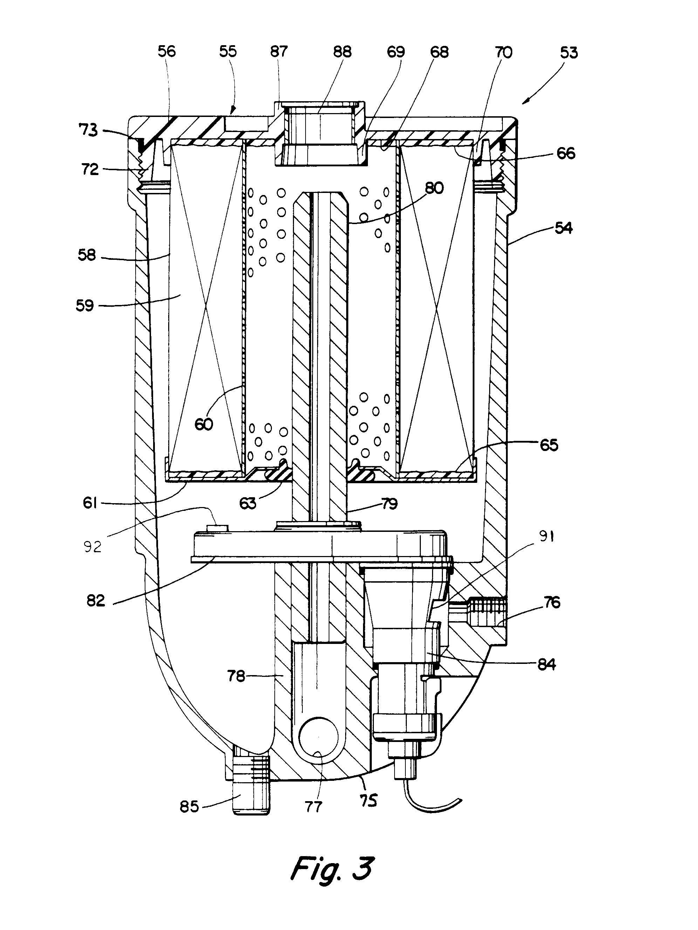

In the embodiment of Figure 3, a fuel filter 53 comprises a housing 54 and a combination cover/cartridge assembly 55. The cover/cartridge assembly 55 includes a cover 56 and a cartridge 58, the cartridge 58 including an annular filter media 59 similar to that previously described. The cartridge 58 further includes a vertical perforated centre tube 60 and a bottom end cap 61, the bottom end cap 61 being a circular plate having a central opening around which is disposed an annular elastomeric seal 63. The filter media 59, the centre tube 60 and the bottom end cap 61 are secured as a unitary element by means of deposited potting compound 65. Similarly, the cartridge 58 is secured to the cover 56 by means of a layer of potting compound 66 disposed in a well 68 on the underside of the cover 56, the well 68 being formed between concentric downwardly directly circular flanges 69, 70. This provides a consolidated structure which may be inserted and removed as a unit from the filter housing 54. The cover 56 further includes a peripheral flange 72 which is externally threaded and which can be threadedly engaged with the open upper end of the housing 54 in a manner similar to that previously described with respect to the embodiment of Figures 1 and 2.

The housing 54 is a unitary structure comprising an elongate, cylindrical, thin wall housing having an open, internally threaded upper end 73, a rounded, closed lower end 75, a transverse inlet port 76 and an outlet port 77 disposed near the bottom of the housing 54. The outlet port 77 communicates with the interior of a vertically upstanding interior boss 78 which has a central, vertically oriented opening which frictionally receives and retains an upstanding, central, standpipe 79. The standpipe 79 is a tubular structure having a lower end disposed in the boss 78 and an upward free end 80 in the centre of the housing 54 and adjacent the open upper end thereof in close spaced relation to the cover 56.

A heater 82 is provided in a pancake configuration having a central opening which is supported on the central boss 78, through which heater 82 fluid flows from the inlet port 76 to the outer periphery of the filter medium 59. Interposed between the heater 82 and the inlet port 76 is a thermostat 84 which serves to monitor the temperature of the fluid within the housing 54 to control the degree of heat applied by the heater 82. Fluid flows from the inlet port 76 to an inlet opening 91 in the thermostat 84, through an outlet 92 of the heater 82, through the filter medium 59 and the standpipe 79 to the outlet port 77. A drain plug 85 is provided in a threaded opening at the bottom of the filter housing 54 to drain the interior thereof in a manner similar to that described previously.

The cover 56 is a circular, thin plate-like structure having an upstanding boss 87 at the central portion thereof which is threaded to receive a vent plug 88 to vent the interior of the filter housing 54 or for filling purposes therefor. The cover 56 is preferably formed of glass filled nylon and may be conveniently formed by an injection moulded process or appropriately machined to the configuration desired. Glass filled nylon is preferred as a material because of its relatively high strength and ability to withstand axial and threading force loads and yet be of a relatively low cost so as to be disposable together with the filter cartridge 58 upon replacement thereof. The housing 54 is preferably a die cast aluminum structure which may be appropriately machined to provide the threaded port arrangements.

## Claims

1. Fluid filter apparatus, comprising a top loading readily replaceable fluid filter including:

a vertically oriented generally cylindrical filter housing (11, 54) having an open upper end (14, 73);

a fluid flow path to route fluid into, through and out of the housing (11, 54) and including port means (22, 76, 24, 77);

a vertical standpipe (27, 79) in the housing (11, 54) in direct fluid communication with one (22, 76) of the port means;

a filter medium (39, 59) of annular configuration to be disposed in surrounding relation to the standpipe (27, 79) and in the flow path to separate out fluid contaminants, the filter medium (39, 59) including a first axial upper end and a second axial lower end;

an imperforate end cap (40, 61) secured to the second axial lower end of the filter medium, the end cap (40, 61) including a central opening to accept the standpipe (27, 79);

seal means (51, 63) to seal the end cap (40, 61) on the standpipe (27, 79); and

a disposable cover (35, 56) to close the open upper end (14, 73) of the housing (11, 54), the filter medium (39, 59) being permanently affixed at its first axial upper end to the cover (35, 56) and the disposable cover (35, 56) being releasably secured at the open end of the housing (11, 54) and being disposable with the filter medium (39, 59).

2. Fluid filter apparatus according to claim 1, wherein the cover (35, 56) further comprises means (49, 72) thereon for releaseably securing the cover (35, 56) at the open end (14, 73) of the housing.

3. Fluid filter apparatus according to claim 2, further including seal means (52) supported on the cover and disposable therewith.

4. Fluid filter apparatus according to claim 1, in which the housing (11, 54) is vertically oriented with the open end (14, 73) at the upper end;

the tubular standpipe (27, 79) has its lower end secured in the housing in fluid communication with the outlet port (24, 77) and its upper end free and adjacent the open upper end (14, 73) of the housing (11, 54);

the filter cartridge (32, 55) is removably received in the open upper end of the housing; and

securing means (49, 72) are provided releaseably to secure the cover (35, 56) at the open upper end (14, 73) of the housing (11, 54).

5. Fluid filter apparatus according to claim 4, wherein the housing (11, 54) includes a generally cylindrical cavity therein in which the standpipe (27, 79) is generally centrally disposed, the cover (35, 56), the end cap (40, 61) and the filter medium (39, 59) are generally circular, and the securing means comprises interengageable threads on the cover (35, 56) and the housing (11, 54) whereby the filter cartridge (32, 55) may be rotatably engaged and disengaged with the housing.

6. Fluid filter apparatus according to claim 5, wherein the cover (35, 56) includes a central well (45, 68) on the underside thereof in which the upper end of the filter medium (39, 59) is received, the well (45, 68) being partly filled with potting compound sealably to secure the filter medium therein.

7. Fluid filter apparatus according to claim 6, wherein the cover (35, 56) is formed of glass-filled nylon.

8. Fluid filter apparatus according to claim 6, wherein the housing has an integral closed lower end (75) and the outlet port (77) is located in the lower end (75), and further including a drain valve (85) in the lower end (75).

9. Fluid filter apparatus according to claim 6, wherein the housing further comprises a threaded lower end (18), and a contaminant bowl (19) is threadedly engageable at the lower end (18).

10. Fluid filter apparatus according to claim 9, wherein the inlet port (22) is disposed adjacent the upper end of the housing (11) and a drain valve (30) is included in the contaminant bowl.

## Patentansprüche

1. Flüssigkeitsfiltervorrichtung, die ein von oben her zu ladendes, leicht austauschbares Flüssigkeitsfilter umfaßt, das folgendes aufweist:
ein vertikal ausgerichtetes, im allgemeinen zylinderförmiges Filtergehäuse (11, 54) mit einem offenen oberen Ende (14, 73),
einen Flüssigkeitsströmungsweg zum wahlweise Leiten der Flüssigkeit in das Gehäuse (11, 54), durch das Gehäuse (11, 54) hindurch und aus dem Gehäuse (11, 54) heraus, und mit Öffnungen (22, 76, 24, 77),

ein vertikales Steigrohr (27, 79) in dem Gehäuse (11, 54), das in direkter Flüssigkeitsverbindung mit einer (22, 76) der Öffnungen steht,

ein Filtermedium (39, 59) mit einer ringförmigen Konfiguration, das in einer dieses umgebenden Beziehung zu dem Steigrohr (27, 79) und in dem Strömungsweg angeordnet wird, um Flüssigkeitsverunreinigungen abzusondern, wobei das Filtermedium (39, 59) ein erstes axiales oberes Ende und ein zweites axiales untere Ende umfaßt,

eine nichtperforierte Abschlußkappe (40, 61), die an dem zweiten axialen unteren Ende des Filtermediums befestigt ist, wobei die Abschlußkappe (40, 61) eine zentrale Öffnung zur Aufnahme des Steigrohrs (27, 79) umfaßt,

Dichtungsmittel (51, 63) zum Verschließen der Abschlußkappe (40, 61) auf dem Steigrohr (27, 79), und

eine Wegwerfabdeckung (35, 56) zum Schließen des offenen oberen Endes (14, 73) des Gehäuses (11, 54) wobei das Filtermedium (39, 59) mit seinem ersten axialen Ende dauerhaft an der Abdeckung (35, 56) befestigt ist und die Wegwerfabdeckung (35, 56) lösbar an dem offenen Ende des Gehäuses (11, 54) befestigt ist und mit dem Filtermedium (39, 59) weggeworfen werden kann.

2. Flüssigkeitsfiltervorrichtung nach Anspruch 1, bei der die Abdeckung (35, 56) desweiterem Mittel (49, 72) zum lösbaren Befestigen der Abdeckung (35, 56) an dem offenen Ende (14, 73) des Gehäuses aufweist.

3. Flüssigkeitsfiltervorrichtung nach Anspruch 2, desweiteren mit Dichtungsmitteln (52), die auf der Abdeckung abgestützt und damit wegwerfbar sind.

4. Flüssigkeitsfiltervorrichtung nach Anspruch 1, bei der das Gehäuse (11, 54) vertikal ausgerichtet ist, wobei sich das offene Ende (14, 73) an dem oberen Ende befindet,

das untere Ende des röhrenförmigen Steigrohrs (27, 79) in dem Gehäuse in Fließverbindung mit der Auslaßöffnung (24, 77) befestigt ist und sich sein oberes Ende frei und nahe dem offenen oberen Ende (14, 73) des Gehäuses (11, 54) befindet,

die Filterpatrone (32, 55) herausnehmbar in dem offenen oberen Ende des Gehäuses aufgenommen ist, und bei der die Befestigungsmittel (49, 72) herausnehmbar vorgesehen sind, um die Abdeckung (35, 56) an dem offenen oberen Ende (14, 73) des Gehäuses (11, 54) zu befestigen.

5. Flüssigkeitsfiltervorrichtung nach Anspruch 4, bei der das Gehäuse (11, 54) in sich einen im allgemeinen zylindrischen Hohlraum umfaßt, in dem sich das Steigrohr (27, 79) im allgemeinen mittig befindet, die Abdeckung (35, 56), die Abschlußkappe (40, 61) und das Filtermedium (39, 59) im allgemeinen kreisförmig sind, und das Befestigungsmittel miteinander in Eingriff bringbare Gewinde auf der Abdeckung (35, 56) und dem Gehäuse (11, 54) umfaßt, wodurch die Filterpatrone (32, 55) drehbar mit dem Gehäuse in Eingriff gebracht und davon gelöst werden kann.

6. Flüssigkeitsfiltervorrichtung nach Anspruch 5, bei der die Abdeckung (35, 56) eine mittlere Wand (45, 68) auf ihrer Unterseite umfaßt, in der das obere Ende des Filtermediums (39, 59) aufgenommen wird, wobei die Vertiefung (45, 68) teilweise mit einer Einbettungsmischung gefüllt ist, um das Filtermedium abdichtend darin zu befestigen.

7. Flüssigkeitsfiltervorrichtung nach Anspruch 6, bei der die Abdeckung (35, 56) aus glasfaserverstärktem Nylon geformt ist.

8. Flüssigkeitsfiltervorrichtung nach Anspruch 6, bei der das Gehäuse ein integrales geschlossenes untere Ende (75) aufweist und sich die Auslaßöffnung (77) in dem unteren Ende (75) befindet, und außerdem ein Entleerungsventil (85) in dem unteren Ende (75) umfaßt.

9. Flüssigkeitsfiltervorrichtung nach Anspruch 6, bei der das Gehäuse desweiteren ein mit einem Gewinde versehenes unteres Ende (18) umfaßt, und eine Schale (19) für Verunreinigen über ein Gewinde mit dem unteren Ende (18) in Eingriff steht.

10. Flüssigkeitsfiltervorrichtung nach Anspruch 9, bei der sich die Einlaßöffnung (22) nahe dem oberen Ende des Gehäuses (11) befindet und ein Entleerungsventil (30) in der Schale für Verunreinigungen enthalten ist.

**Revendications**

1. Appareil de filtration pour fluide comprenant un filtre à fluide facilement remplaçable à chargement par le haut, appareil caractérisé en ce qu'il comprend :

un carter de filtre généralement cylindrique, orienté verticalement (11, 54) et muni d'une extrémité supérieure ouverte (14, 73) ;

un passage de débit de fluide destiné à acheminer le fluide de façon qu'il pénètre dans le carter (11, 54), qu'il traverse ce carter et sorte de celui-ci, ce passage comprenant des moyens d'orifices (22, 76, 24, 77) ;

un tuyau de support vertical (27, 79) placé dans le carter (11, 54) en communication de fluide directe avec l'un des moyens d'orifices (22, 76) ;

un moyen de filtre (39, 59) de configuration annulaire destiné à être disposé autour du tuyau de support (27, 79) et dans le passage de débit de fluide pour séparer les déchets du fluide, ce moyen de filtre (39, 59) comprenant une première extrémité supérieure axiale et une seconde extrémité inférieure axiale ;

un chapeau d'extrémité non perforé (40, 61) fixé à la seconde extrémité inférieure axiale du moyen de filtre, ce chapeau d'extrémité (40, 61) comprenant une ouverture centrale destinée à recevoir le tuyau de support (27, 79) ;

des moyens d'étanchéité (51, 63) destinés à assurer l'étanchéité du chapeau d'extrémité (40, 61) sur le tuyau de support (27, 79) ; et

un couvercle jetable (35, 56) destiné à fermer l'extrémité supérieure ouverte (14, 73) du carter (11, 54), le moyen de filtre (39, 59) étant fixé de façon permanente par sa première extrémité supérieure axiale au couvercle (35, 56) et ce couvercle jetable (35, 56) étant fixé de manière amovible à l'extrémité ouverte du carter (11, 54) de façon qu'on puisse le jeter avec le moyen de filtre (39, 59).

2. Appareil de filtration pour fluide selon la revendication 1, caractérisé en ce que le couvercle (35, 56) comprend en outre des moyens (49, 72) formés sur celui-ci pour fixer de manière amovible le couvercle (35, 56) à l'extrémité ouverte (14, 73) du carter.

3. Appareil de filtration pour fluide selon la revendication 2, caractérisé en ce qu'il comprend en outre des moyens d'étanchéité (52) supportés par le couvercle et jetables avec celui-ci.

4. Appareil de filtration pour fluide selon la revendication 1, caractérisé en ce que le carter (11, 54) est orienté verticalement de façon que l'extrémité ouverte (14, 73) soit située à l'extrémité supérieure ;

en ce que l'extrémité inférieure du tuyau de support tubulaire (27, 79) est fixée dans le carter en communication de fluide avec l'orifice de sortie (24, 77) tandis que l'extrémité supérieure du tuyau de support tubulaire (27, 79) est libre et adjacente à l'extrémité supérieure ouverte (14, 73) du carter (11, 54) ;

en ce que la cartouche de filtre (32, 55) vient se loger de manière amovible dans l'extrémité supérieure ouverte du carter ; et

en ce que des moyens de fixation (49, 72) sont utilisés pour fixer de manière amovible le couvercle (35, 56) à l'extrémité supérieure ouverte (14, 73) du carter (11, 54).

5. Appareil de filtration pour fluide selon la revendication 4, caractérisé en ce que le carter (11, 54) comprend dans celui-ci une cavité généralement cylindrique dans laquelle le tuyau de support (27, 79) est placé dans une position généralement centrale, le couvercle (35, 56), le chapeau d'extrémité (40, 61) et le moyen de filtre (39, 59) étant généralement circulaires et les moyens de fixation comprenant des pas de vis se vissant les uns dans les autres sur le couvercle (35, 56) et le carter (11, 54), ce qui permet ainsi de faire tourner la cartouche de filtre (32, 55) pour la visser et la dévisser du carter.

6. Appareil de filtration pour fluide selon la revendication 5, caractérisé en ce que le couvercle (35, 56) comprend, sur son côté inférieur, un puits central (45, 68) dans lequel vient se loger l'extrémité supérieure du moyen de filtre (39, 59), ce puits (45, 68) étant partiellement rempli d'un composé de scellage destiné à fixer de manière étanche le moyen de filtre dans celui-ci.

7. Appareil de filtration pour fluide selon la revendication 6, caractérisé en ce que le couvercle (35, 56) est réalisé en nylon chargé de verre.

8. Appareil de filtration pour fluide selon la revendication 6, caractérisé en ce que le carter comporte une extrémité inférieure fermée d'une seule pièce (75) dans laquelle est formé l'orifice de sortie (77), et en ce que le carter comprend en outre un clapet de vidange (85) dans l'extrémité inférieure (75).

9. Appareil de filtration pour fluide selon la revendication 6, caractérisé en ce que le carter comprend en outre une extrémité inférieure filetée (18) et en ce qu'une cuvette de réception de déchets (19) vient se visser dans cette extrémité inférieure (18).

10. Appareil de filtration pour fluide selon la revendication 9, caractérisé en ce que l'orifice d'entrée (22) est disposé au voisinage de l'extrémité supérieure du carter (11), et en ce qu'un clapet de vidange (30) est formé dans la cuvette de réception de déchets.

Fig. 1

Fig. 2

*Fig. 3*